# EUROPÄISCHE PATENTSCHRIFT

(11) **EP 0 925 872 B1**
(45) Veröffentlichungstag und Bekanntmachung des Hinweises auf die Patenterteilung: **15.05.2002**
(21) Anmeldenummer: 98118342.9
(22) Anmeldetag: 28.09.1998
(51) Int. Cl.: B23Q 3/18, B23Q 11/00, B23Q 3/02

(54) **Spanneinrichtung zur Fixierung eines Einzugsnippels an einer Aufspannplatte**
Clamping device for fixing a clamping bolt to a carrier
Dispositif de serrage pour la fixation d'un boulon de serrage sur une porte-pièce

(30) Priorität: 23.12.1997 DE 29722730 U; 01.07.1998 DE 29811699 U
(43) Veröffentlichungstag der Anmeldung: 30.06.1999
(73) Patentinhaber: Vischer & Bolli AG, 8600 Dübendorf 1 (CH)
(72) Erfinder: Etter, Ernst, 8800 Thalwil (CH)
(74) Vertreter: Paul, Dieter-Alfred, Dipl.-Ing.

(56) Entgegenhaltungen:
- EP-A- 0 827 806
- EP-A- 0 846 519
- DE-A- 4 135 418
- DE-U- 29 702 577
- US-A- 3 513 734

## Beschreibung

Die vorliegende Erfindung betrifft eine Spanneinrichtung zur Fixierung eines Einzugsnippels an einer Aufspannplatte, mit einer Zylinder/Kolben-Anordnung, die einen Zylinder und einen im Zylinder unter Bildung eines Druckraums verschiebbar geführten Kolben umfaßt, einer Aufnahme für den Einzugsnippel, die an der dem Druckraum gegenüberliegenden Stirnseite des Kolbens ausgebildet ist, und einem durch die Zylinder/Kolben-Anordnung betätigbaren Spannmechanismus, um den Einzugsnippel in der Aufnahme zu arretieren.

Die Bearbeitung von metallischen Werkstücken ist häufig sehr komplex und kann eine Vielzahl von zerspanenden und spanlosen Arbeitsgängen an unterschiedlichen Bearbeitungsmaschinen umfassen, um aus einem Rohling das fertige Bauteil herzustellen. Insbesondere bei automatisierten Fertigungsabläufen ist es dabei wesentlich, daß das Werkstück bei jedem Arbeitsgang eine definierte Lage an der jeweiligen Werkzeugmaschine einnimmt. Zu diesem Zweck ist es in der Praxis üblich, das zu bearbeitende Werkstück zunächst auf eine Lochrasterplatte aufzuspannen und dann die ganze Einheit über vier Einzugsnippel, die an der Rückseite der Lochrasterplatte vorgesehen und als Zentrierelemente ausgebildet sind, an der jeweiligen Werkzeugmaschine festzuspannen, indem die Einzugsnippel in entsprechende Schnellspanneinheiten, die am Maschinentisch vorgesehen sind, eingesetzt werden. In der Massenproduktion kann so die Lage der Schnellspanneinrichtungen als fester Maschinenparameter berücksichtigt werden, so daß es lediglich erforderlich ist, jeweils das Werkstück exakt an der Lochrasterplatte zu positionieren. Das eigentliche Fest- und Umspannen der Einheit aus Werkstück und Lochrasterplatte an den Maschinen kann dann sehr schnell und unproblematisch erfolgen, ohne daß eine weitere Positionierung notwendig ist.

Aus der DE-U 297 02 577 ist eine hydraulische Spanneinrichtung der eingangs genannten Art bekannt. Diese Spanneinrichtung umfaßt einen Zylinder, in dem ein Kolben unter Bildung eines Druckraums verschiebbar angeordnet ist. In der dem Druckraum gegenüberliegenden Stirnseite des Kolbens ist eine Aufnahme ausgebildet, in die ein Einzugsnippel eingesetzt werden kann und in der ein Spannmechanismus ausgebildet ist, um den Einzugsnippel in der Aufnahme zu fixieren. Die Betätigung des Spannmechanismus erfolgt hierbei indem der Druckraum der Zylinder/Kolbenanordnung mit einem Hydraulikmittel beaufschlagt wird.

Problematisch ist allerdings, daß solche hydraulische Spanneinrichtungen im Einsatz anfällig gegen Verschmutzungen durch Späne und kleine Partikel sind. Diese Verschmutzungen können zu Systemungenauigkeiten und im Extremfall auch zu Funktionsstörungen führen.

Bei der bekannten Spanneinrichtung ist deshalb die Aufnahme mit einem Ablauf versehen, durch welchen Späne und Kühlschmiermittel aus der Aufnahme nach unten herausfallen können. Durch diese Ausgestaltung wird zwar erreicht, daß sich keine großen Mengen an Spänen und Kühlschmiermittel in der Aufnahme sammeln können, es besteht jedoch nach wie vor die Gefahr, daß Späne bzw. Kühlschmiermittel am Einzugsbolzen bzw. im Spannmechanismus haften, so daß es zu Funktionsstörungen kommen kann.

Bei einer weiteren Spanneinrichtung, die aus der EP 0827806 A1 bekannt ist, sind Blasluftkanäle vorgesehen, die im Zylinder der Spannvorrichtung ausgebildet sind und deren Austrittsöffnungen auf die entsprechenden zu reinigenden Stellen ausgerichtet sind. Diese Ausführungsform ist jedoch konstruktiv aufwendig, und des weiteren können auch nicht alle Bereiche des Spannmechanismus gesäubert werden.

Aufgabe der Erfindung ist es daher, eine Spanneinrichtung der eingangs genannten Art so auszubilden, daß verschmutzungsbedingte Systemungenauigkeiten auf einfache Weise zumindest weitgehend vermieden werden.

Diese Aufgabe ist erfindungsgemäß dadurch gelöst, daß in Zylinder und Kolben wenigstens ein an eine Druckluftquelle anschließbarer Lufteinblaskanal ausgebildet ist, der in die Aufnahme an ihrer der Einsetzöffnung für den Einzugsnippel gegenüberliegenden Bodenseite insbesondere mittig mündet und zur Einsetzöffnung hingerichtet ist. Durch diese Ausgestaltung wird die Möglichkeit geschaffen, beim Einsetzen eines Einzugsnippels in die Aufnahme der Spanneinrichtung und gegebenenfalls beim Entfernen des Einzugsnippels aus der Aufnahme Druckluft in die Aufnahme zu blasen und damit den Einzugsnippel sowie die Aufnahme, insbesondere die an diesen Bauteilen vorgesehenen Paßflächen, sauber zu halten. Dadurch, daß der Lufteinblaskanal in den Bodenbereich der Aufnahme insbesondere mittig mündet, wird sichergestellt, daß der in der Aufnahme eingeblasene Luftstrahl im wesentlichen alle Bereiche der Aufnahme erreicht, und zwar insbesondere auch die relevanten Bauteile des Spannmechanismus. Hierbei kann es zweckmäßig sein, die Druckluft an mehreren Stellen gleichzeitig in die Aufnahme zu leiten.

In Ausgestaltung der Erfindung kann vorgesehen sein, daß der Kolben an seiner druckraumseitigen Stirnfläche einen Ansatz aufweist, der in eine im Boden des Zylinders ausgebildete und einen Teil des Lufteinblaskanals bildende Ausnehmung eingesetzt ist, wobei in dem Ansatz ein die Ausnehmung und die Aufnahme verbindender Kanalabschnitt ausgebildet ist. Durch diese Ausgestaltung wird die Spanneinrichtung kompakt und wenig störungsanfällig.

In weiterer Ausbildung der Erfindung ist vorgesehen, daß die Luftkanäle in einem zur Führung des Einzugsnippels vorgesehenen Führungselement ausgebildet sind, wobei sie zweckmäßiger Weise in der zur Einsetzöffnung der Aufnahme weisenden Stirnfläche des Führungselements ausgebildet sind, was den Vorteil hat, daß sie leicht hergestellt, beispielsweise in die Stirnfläche eingeschliffen werden können. Im übrigen sollten die Luftkanäle zweckmäßiger Weise gleichmäßig verteilt über den Umfang des Führungselements angeordnet sein und im wesentlichen radial zu diesem verlaufen.

Hinsichtlich weiterer vorteilhafter Ausgestaltungen der Erfindung wird auf die Unteransprüche sowie die nachfolgende Erläuterung eines Ausführungsbeispieles unter Bezugnahme auf die beiliegende Zeichnung verwiesen. In der Zeichnung zeigt
- Figur 1: im Längsschnitt eine Ausführungsform einer erfindungsgemäßen Spanneinrichtung mit eingesetztem und festgespanntem Einzugsnippel,
- Figur 2: die Spanneinrichtung aus Figur 1 mit eingesetztem, aber nicht festgespanntem Einzugsnippel,
- Figur 3: das Führungselement der Spanneinrichtung in Schnittansicht und
- Figur 4: das Führungselement aus Figur 3 in Draufsicht.

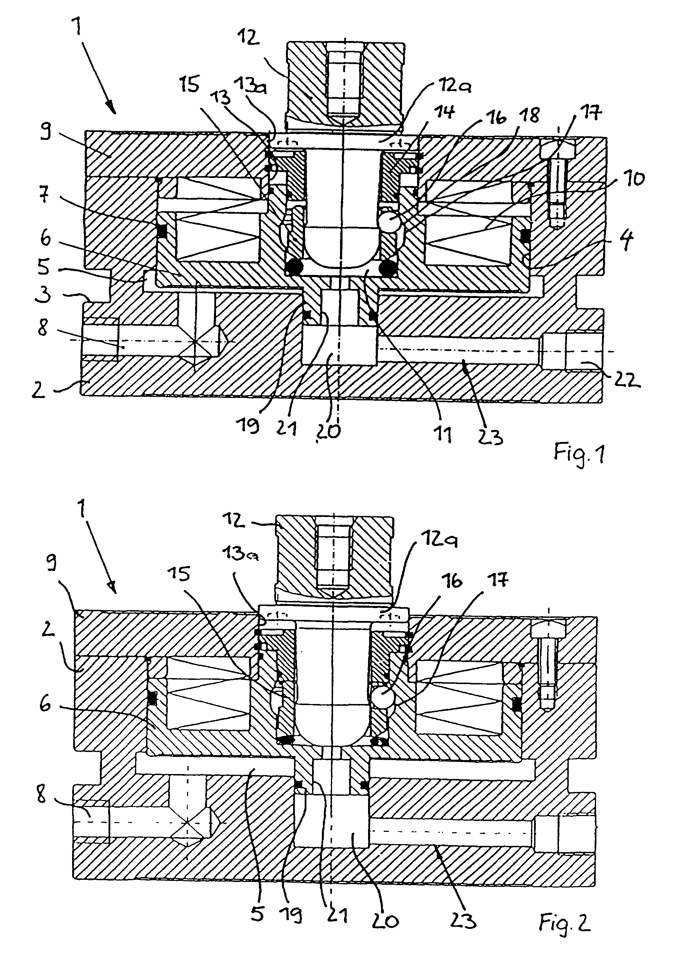

In den Figuren 1 und 2 ist eine Ausführungsform einer erfindungsgemäßen Spanneinrichtung 1 dargestellt. Zu der Spanneinrichtung 1 gehört ein als Zylinder ausgebildetes Gehäuse 2, das an seinem oberen Ende offen ist und außenseitig eine Umfangsnut 3 aufweist, in die Spannwerkzeuge zur Fixierung der Spanneinrichtung 1 an einem nicht dargestellten Maschinentisch eingreifen können. In die Zylinderbohrung 4 des Gehäuses 2 ist unter Bildung eines Druckraumes 5 ein Kolben 6 axial bewegbar eingesetzt, wobei der Ringspalt zwischen Zylinderbohrung 4 und Kolben 6 durch einen O-Ring 7 abgedichtet ist. In den Boden der Zylinderbohrung 4 mündet ein im Gehäuse 2 ausgebildeter Kanal 8, durch welchen dem Druckraum 5 ein Hydraulikmittel wie beispielsweise Öl zugeführt werden kann.

Die offene Oberseite des Gehäuses 2 ist durch einen Dekkel 9 verschlossen, der an dem Gehäuse 2 festgeschraubt ist. Zwischen dem Deckel 9 und dem Kolben 6 ist ein Tellerfederpaket 10 angeordnet, das den Kolben 6 in Richtung des Bodens der Zylinderbohrung 4 beaufschlagt.

In der dem Druckraum 5 gegenüberliegenden Oberseite des Kolbens 6 ist eine Sackbohrung vorgesehen, die eine Aufnahme 11 für einen Einzugsnippel 12 bildet, der in die Aufnahme 11 durch eine im Deckel 9 vorgesehene Durchgangsbohrung 13 eingesetzt werden kann. Zur Erleichterung dieses Einsetzvorganges ist in der Durchgangsbohrung 13 ein hülsenförmiges Führungselement 14 vorgesehen, und zur exakten Positionierung des Einzugsnippels 12 in der Spanneinrichtung 1 ist der obere Bereich der Durchgangsbohrung 13 in Passung zu einem Flansch 12a des Einzugsnippels 12 dimensioniert, d.h. als Paßfläche 13a ausgebildet.

Zur Fixierung des Einzugsnippels 12 in der Aufnahme 11 ist ein Spannmechanismus vorgesehen. Dieser umfaßt in an sich bekannter Weise einen in die Aufnahme 11 eingesetzten Kugelkäfig 15, in dem eine Kugel 16 radial verstellbar gehalten ist, die je nach Kolbenstellung in eine Nut 17 in der Wandung der Aufnahme 11 nach außen ausweichen kann, so daß ein Einzugsnippel 12 in den Kugelkäfig 15 eingesetzt oder aus diesem herausgenommen werden kann, oder durch die Wandung der Aufnahme 11 an einem solchen Ausweichen gehindert und damit in Eingriff mit einer entsprechenden Gegenfläche, beispielsweise einer Ringnut, am Einzugsnippel 12 gehalten wird (Figur 1).

In der Zeichnung zeigt die Figur 1 die Spanneinrichtung 1 in ihrer Spannstellung, in der der Druckraum 5 drucklos ist und der Kolben 6 durch das Tellerfederpaket 10 nach unten gedrückt wird, so daß eine obere Schrägfläche 18 der Nut 17 die Kugel 16 in Eingriff mit dem Einzugsnippel 12 hält. Wenn jetzt der Druckraum 5 über den Kanal 8 mit Druckmittel beaufschlagt wird, wird der Kolben 6 entgegen der Rückstellkraft des Tellerfederpaketes 10 nach oben in die in Figur 2 dargestellte Lage gedrückt, in der die Nut 17 der Kugel 16 Raum läßt, radial nach außen auszuweichen, so daß der Einzugsnippel 12 aus der Spanneinrichtung 1 herausgenommen beziehungsweise dann wieder in diese eingesetzt werden kann. Wie die Figur 2 gut erkennen läßt, ist der Hub des Kolbens 6 dabei so gewählt, daß der Einzugsnippel 12 durch den Boden der Aufnahme 11 nach oben gedrückt wird, um daß Entfernen des Einzugsnippels 12 zu erleichtern.

Gemäß der Erfindung weist der Kolben 6 an seiner druckraumseitigen Stirnfläche einen Ansatz 19 auf, der in einer im Boden der Zylinderbohrung 4 ausgebildete Ausnehmung 20 verschiebbar geführt und gegenüber dieser abgedichtet ist. Die Ausnehmung 20 bildet zusammen mit einem in dem Ansatz 19 vorgesehenen, die Ausnehmung 20 mit dem Boden der Aufnahme 11 für den Einzugsnippel 12 verbindenden, düsenartig ausgebildeten Kanalabschnitt 21 und mit einem sich von der Gehäuseaußenwandung zur Ausnehmung 20 erstreckenden Kanalabschnitt 22 einen Lufteinblaskanal 23, der an eine nicht dargestellte Druckluftquelle angeschlossen ist. Durch diesen Lufteinblaskanal 23 kann beim Einsetzen eines Einzugsnippels 12 in die Spanneinrichtung 1 oder Herausnehmen des Einzugsnippels 12 Druckluft in die Aufnahme 11 eingeblasen werden, um auf diese Weise die Aufnahme 11 und den Einzugsnippel 12 von Spänen und sonstigen Verunreinigungen zu säubern.

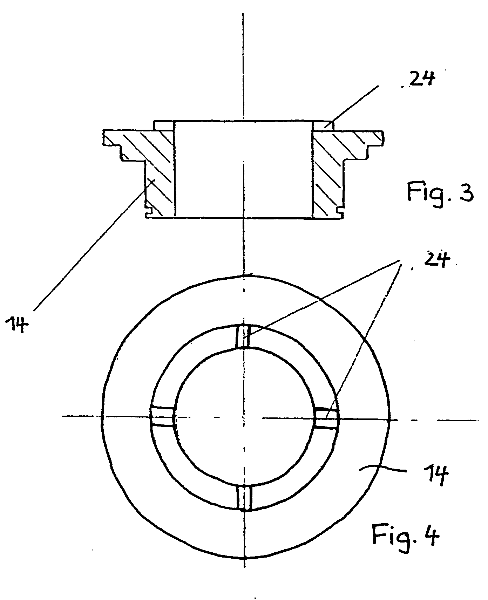

Um hierbei sicherzustellen, daß der Luftstrom auch die dem Flansch des Einzugsnippels zugeordnete Paßfläche 13a der Aufnahme 11 erreicht, sind in der nach oben weisenden Stirnfläche des Führungselements 14 insgesamt vier nutartige Luftkanäle 24 ausgebildet, die jeweils um 90° zueinander versetzt angeordnet sind und radial zum Führungselement 14 verlaufen (Figuren 3 und 4). Die Luftkanäle 24 sind vorgesehen, um den nach oben gerichteten, aus dem Lufteinblaskanal 23 tretenden Luftstrom jedenfalls teilweise in Richtung der Paßfläche 13a umzulenken. Durch diese Maßnahme wird sichergestellt, daß auch die Paßfläche 13a, an die sonst nur schwer Luft gelangen würde, zuverlässig gereinigt wird.

## Patentansprüche

1. Spanneinrichtung zur Fixierung eines Einzugsnippels (12) an einer Aufspannplatte, mit einer Zylinder/Kolben-Anordnung, die einen Zylinder (2) und einen im Zylinder (2) unter Bildung eines Druckraums (5) verschiebbar geführten Kolben (6) umfaßt, einer Aufnahme (11) für den Einzugsnippel (12), die an der dem Druckraum (5) gegenüberliegende Stirnseite des Kolbens (6) ausgebildet ist, und einem durch die Zylinder/Kolben-Anordnung betätigbaren Spannmechanismus, um den Einzugsnippel (12) in der Aufnahme (11) zu arretieren, **dadurch gekennzeichnet, daß** in Zylinder (2) und Kolben (6) wenigstens ein an eine Druckluftquelle anschließbarer Lufteinblaskanal (23) ausgebildet ist, der in die Aufnahme (11) an ihrer der Einsetzöffnung für den Einzugsnippel (11) gegenüberliegenden Bodenseite insbesondere mittig mündet und zur Einsetzöffnung hingerichtet ist.

2. Spanneinrichtung nach Anspruch 1, **dadurch gekennzeichnet, daß** der Lufteinblaskanal (23) über eine Mehrzahl von düsenartig ausgebildeten Eintrittsöffnungen in die Aufnahme (11) mündet.

3. Spanneinrichtung nach einem der vorherigen Ansprüche, **dadurch gekennzeichnet, daß** zur axialen Positionierung eines Einzugsnippels (12) in der Aufnahme (11) ein Anschlag vorgesehen ist.

4. Spanneinrichtung nach einem der vorherigen Ansprüche, **dadurch gekennzeichnet, daß** der Kolben (6) an seiner druckraumseitigen Stirnfläche einen Ansatz (19) aufweist, der in eine im Zylinder (2) ausgebildete und einen Teil des Lufteinblaskanals (23) bildende Ausnehmung (20) eingesetzt ist, wobei in dem Ansatz (19) ein die Ausnehmung (20) und die Aufnahme (11) verbindbarer Kanalabschnitt (21) ausgebildet ist.

5. Spanneinrichtung nach Anspruch 4, **dadurch gekennzeichnet, daß** der Kanalabschnitt (21) in dem Ansatz (19) zur Aufnahme (11) hin düsenartig ausgebildet ist.

6. Spanneinrichtung nach Anspruch 4 oder 5, **dadurch gekennzeichnet, daß** zwischen Ansatz (19) und Ausnehmung (20) ein Dichtungselement vorgesehen ist.

7. Spanneinrichtung nach einem der Ansprüche 3 bis 6, **dadurch gekennzeichnet, daß** der Spannmechanismus ein radial in der Aufnahme (11) bewegbares Klemmelement (16) aufweist, das bei einer Axialbewegung des Kolbens (6) in einer Richtung mit einer Schrägfläche (18) des Kolbens (6) zusammenwirkt und dadurch radial nach innen gedrückt wird, um mit einem in die Aufnahme (11) eingesetzten Einzugsnippel (12) in Eingriff zu kommen und diesen so zu arretieren.

8. Spanneinrichtung nach Anspruch 7, **dadurch gekennzeichnet, daß** das Klemmelement eine Kugel (16) ist, die in einem in die Aufnahme (11) eingesetzten Kugelkäfig (15) gehalten ist.

9. Spanneinrichtung nach einem der vorherigen Ansprüche, **dadurch gekennzeichnet, daß** in wenigstens einem die Aufnahme (11) definierenden Bauteil (14) quer zur Führungsrichtung verlaufende und zu einer Paßfläche (13a) für die Zentrierung des Einzugsnippel gerichtete Luftkanäle (24) ausgebildet sind, durch welche über den Lufteinblaskanal (23) eingeblasene Luft in Richtung der Paßfläche (13a) gelenkt wird.

10. Spanneinrichtung nach Anspruch 9, **dadurch gekennzeichnet, daß** die Luftkanäle (24) in einem zur Führung des Einzugsnippels (2) vorgesehenen Führungselement (14) ausgebildet sind.

11. Spanneinrichtung nach Anspruch 10, **dadurch gekennzeichnet, daß** die Luftkanäle (24) in der zur Einsetzöffnung der Aufnahme (11) weisenden Stirnfläche des Führungselements (14) ausgebildet, insbesondere eingeschliffen sind.

12. Spanneinrichtung nach einem der Ansprüche 9 bis 11, **dadurch gekennzeichnet, daß** die Luftkanäle (24) gleichmäßig verteilt über den Umfang des Führungselements (14) angeordnet sind.

13. Spanneinrichtung nach einem der Ansprüche 9 bis 12, **dadurch gekennzeichnet, daß** die Luftkanäle (24) radial zum Führungselement (14) verlaufen.

## Claims

1. A clamping device for securing a draw-in nipple (12) to a clamping plate, comprising a piston/cylinder arrangement provided with a cylinder (2) and a piston (6) that is guided displaceably in the cylinder (2) and with the cylinder (2) forms a pressure space (5), a receptacle (11) for the draw-in nipple (12), which is configured at the end face of the piston (6) located oppositite to the pressure space (5), and a clamping mechanism which is actuable by the piston/cylinder arrangement in order to immobilize the draw-in nipple (12) in the receptacle (11), **characterized in that** at least one air delivery conduit (23) is configured in the cylinder (2) and piston (6), which is connectable to a compressed air source and opens into the receptacle (11) at its side opposite to the insertion opening for the draw-in nipple (12) in particular centrally thereof and is directed to the insertion opening.

2. The clamping device as defined in Claim 1, wherein the air delivery conduit (23) opens into the receptacle (11) via a plurality of nozzle-shaped inlet openings.

3. The clamping device as defined in any preceeding claim, wherein a stop is provided for axial positioning of a draw-in nipple (12) in the receptacle (11).

4. The clamping device as defined in any preceeding claim, wherein the piston (6) has on its end surface facing the pressure space an extension (19) which is inserted into a recess (20) that is configured in the cylinder and forms a part of the air delivery conduit (23), a conduit section (21) joining the recess (20) and the receptacle (11) being configured in the extension (19).

5. The clamping device as defined in Claim 4, wherein the conduit section (21) in the extension (19) is configured in nozzle-like fashion toward the receptacle (11).

6. The clamping device as defined in Claim 4 or 4, wherein a sealing element is provided between the extension (19) and recess (20).

7. The clamping device as defined in one of Claims 3 through 6, wherein the clamping mechanism has a clamping element (16), movable radially in the receptacle (11), which coacts with an oblique surface (18) of the piston (6) when the piston (6) moves axially in one direction, and is thereby pressed radially inward in order to come into engagement with a draw-in nipple 12) inserted into the receptacle (11) and thus immobilize it.

8. The clamping device as defined in Claim 7, wherein the clamping element is a ball (16) which is retained in a ball cage (15) inserted into the receptacle (11).

9. The clamping device as defined in one of the foregoing claims, wherein air conduits (24) which run transversely to the guidance direction and are directed toward a seating surface (13a) for centering the draw-in nipple, and through which air blown in through the air delivery conduit (23) is steered toward the seating surface (13a), are configured in at least one component (14) defining the receptacle (11).

10. The clamping device as defined in Claim 9, wherein the air conduits (24) are configured in a guide element (14) provided for guidance of the draw-in nipple (2).

11. The clamping device as defined in Claim 10, wherein the air conduits (24) are configured, in particular are ground in, in the end surface of the guide element (14) facing toward the insertion opening of the receptacle (11).

12. The clamping device as defined in one of Claims 9 through 11, wherein the air conduits (24) are arranged in a manner uniformly distributed over the circumference of the guide element (14).

13. The clamping device as defined in one of Claims 9 through 12, wherein the air conduits (24) run radially with respect to the guide element (14).

## Revendications

1. Installation de serrage pour la fixation d'un boulon de serrage (12) à un plateau de fixation, avec un dispositif de vérin à piston en ce qu'il contient un fourreau (2) et dans le fourreau (2) sous la formation d'une chambre de pression (5) des pistons guidés coulissants (6), un point d'entrée (11), pour le boulon de serrage (12) qui est formé à la chambre de pression (5) contiguë à la face frontale du piston (6), et par l'un des vérins peut être actionné le mécanisme du Installation de serrage, pour le boulon de serrage (12) dans le point d'entré (11), **caractérisé en ce que** dans les fourreaux (2) et les pistons (6) est formé au moins un canal d'entré d'air pouvant être connecté à une source pneumatique (23), qui dans le point d'entré (11) à son ouverture d'introduction pour le boulon de serrage (11) contiguë à la face du fond en particulier au centre est dirigé et débouche sur l'ouverture d'introduction.

2. Installation de serrage selon la revendication 1, **caractérisé en ce que** le canal d'injection d'air (23) rejoint le point d'entré (11) par une pluralité d'ouvertures d'entrées formées en forme de tuyères.

3. Installation de serrage selon l'une des revendications précédentes, **caractérisé en ce qu'** un arrêt est prévu au positionnement axial d'un boulon de serrage (12) dans le point d'entré (11).

4. Installation de serrage selon l'une des revendications précédentes, **caractérisé en ce que** le piston (6) à sa surface frontale latérale de poussée dans la chambre de pression présente un commencement (19) qui est employé dans le fourreau (2) et est formé en partie le canal d'injection d'air (23) formant évidemment (20) et dans le commencement (19) l'évidement (20) et dans lequel sont formés aux points d'entrés (11) reliés aux sections de canal (21) formés.

5. Installation de serrage selon la revendication 4, **caractérisé en ce que** la section de canal (21) est formée au commencement (19) du point d'entrée (11) en forme de tuyère.

6. Installation de serrage selon la revendication 4 ou 5, **caractérisé en ce qu'**est prévu un élément d'étanchéité entre le commencement (19) et l'évidement (20).

7. Installation de serrage selon l'une des revendications 3 à 6, **caractérisé en ce que** le mécanisme de serrage présente dans le sens radial du point d'entrée (11) des éléments de serrage mobiles (16) par lequel lors du déplacement axial du piston(6) dans une direction inclinée (18) du piston (6) agissant en commun et **en ce qu'**il est pressé radialement pour entrer en contact avec l'un des points d'entrée (11) le boulon de serrage(12) introduit et arrête ceux-ci.

8. Installation de serrage selon la revendication 7, **caractérisé en ce que** l'élément de serrage est une bille (16) qui est maintenue dans une cage de bille ( 15) à l'un des points d'entrée (11).

9. Installation de serrage selon l'une des revendications précédentes, **caractérisé en ce que** dans l'un au moins des points d'entrée (11) définissant les éléments de construction (14) passant transversalement à la direction principale et à une surface de passage (13 a) pour le centrage du boulon de serrage les conduits dirigeant l'air (24) sont formés **en ce que** sur le canal d'injection d'air (23) l'air soufflé est dirigé dans la direction de la surface de passage (13a).

10. Installation de serrage selon la revendication 9, **caractérisé en ce que** les conduits à air (24) sont conçues dans la direction du boulon de serrage (2) sont prévus à la conduite des éléments principaux (14).

11. Installation de serrage selon la revendication 10, **caractérisé en ce que** les conduits à air (24) sont formés en particulier ajusté par rodages dans à l'ouverture d'introduction du point d'entré (11) indiquant des surfaces frontales de l'élément principal (14).

12. Installation de serrage selon l'une des revendications 9 à 11, **caractérisé en ce que** les conduits à air (24) sont distribué régulièrement disposés sur l'étendue des éléments de conduite (14).

13. Installation de serrage selon l'une des revendications 9 à 12, **caractérisé en ce que** les conduits à air (24) passent radialement par rapport à l'élément principal (14).
